# EUROPÄISCHE PATENTSCHRIFT

(11) **EP 2 783 738 B1**
(45) Veröffentlichungstag und Bekanntmachung des Hinweises auf die Patenterteilung: **03.07.2019**
(21) Anmeldenummer: 14155039.2
(22) Anmeldetag: 13.02.2014
(51) Int. Cl.: B01D 35/153, B01D 35/16

(54) **Filtereinrichtung**
Filtering device
Dispositif de filtrage

(30) Priorität: 27.03.2013 DE 102013205523
(43) Veröffentlichungstag der Anmeldung: 01.10.2014
(73) Patentinhaber: Mahle International GmbH, 70376 Stuttgart (DE)
(72) Erfinder: Genc, Engin, 71332 Waiblingen (DE)
(74) Vertreter: BRP Renaud & Partner mbB Rechtsanwälte Patentanwälte Steuerberater

(56) Entgegenhaltungen:
- DE-A1-102009 049 868
- DE-A1-102009 054 523
- DE-A1-102011 077 798

## Beschreibung

Die vorliegende Erfindung betrifft eine Filtereinrichtung, insbesondere einen Öl- oder Kraftstofffilter, mit einem einen Filtergehäusetopf und einen Filtergehäusedeckel aufweisenden Filtergehäuse gemäß dem Oberbegriff des Anspruchs 1.

In gattungsgemäßen Filtereinrichtungen ist zur Sicherstellung der Verwendung eines autorisierten Ringfilterelements an diesem oftmals ein axial von einer unteren Endscheibe abstehender Pin angeordnet. Mittels dieses Pins greift das Ringfilterelement bei montierter Filtereinrichtung in einen filtergehäusetopfseitigen Kanal ein und ermöglicht somit eine Inbetriebnahme der Filtereinrichtung ausschließlich dann, wenn das verwendete Ringfilterelement den erforderlichen Pin an der richtigen Stelle aufweist. Pin und Kanal wirken also im Sinne eines Schlüssel-Schloss-Prinzips zusammen.

Eine gattungsgemäße Filtereinrichtung ist beispielsweise aus der DE 10 2011 077 789 A1 bekannt. Die Filtereinrichtung umfasst ein topfartiges Filtergehäuse mit einem rohrförmigen Dom, dessen Führungselement mit einer an einem Standrohr vorgesehenen Führungskontur zusammenwirkt. Außerdem umfasst die Filtereinrichtung einen Filtergehäusedeckel und ein Ringfilterelement mit einem axial abstehenden Pin an der unteren Endscheibe des Ringfilterelements, welcher in einen topfseitigen Kanal eingreift.

Auch die DE 10 2009 049 869 A1 offenbart eine gattungsgemäße Filtereinrichtung. Die Filtereinrichtung umfasst ein topfartiges Filtergehäuse mit einem rohrförmigen Dom, welcher in den Innenraum des Ringfilterelements eingreift. Außerdem umfasst die Filtereinrichtung einen Filtergehäusedeckel und ein Ringfilterelement mit einem axial abstehenden Pin an der unteren Endscheibe des Ringfilterelements, welcher in einen topfseitigen Kanal eingreift.

Eine gattungsgemäße Filtereinrichtung ist auch aus der DE 10 2009 054 523 A1 bekannt. Die Filtereinrichtung umfasst ein topfartiges Filtergehäuse mit einem rohrförmigen Dom, einen Filtergehäusedeckel und ein Ringfilterelement mit einem axial abstehenden Pin an der unteren Endscheibe des Ringfilterelements, welcher in einen topfseitigen Kanal eingreift, wobei ein Führungselement des Doms in eine am Ringfilterelement vorgesehene Führungskontur eingreift.

Auf diese Weise können insbesondere die Verwendung von nicht-autorisierten Ringfilterelementen vermieden und dadurch Schäden an einem die Filtereinrichtung verwendenden Verbrennungsmotor verhindert werden. Als schwierig hat sich bei derartigen Filtereinrichtungen jedoch oftmals deren Montage erwiesen, insbesondere, wenn das Ringfilterelement im Filtergehäuse montiert werden soll.

Die vorliegende Erfindung beschäftigt sich daher mit dem Problem, für eine Filtereinrichtung der gattungsgemäßen Art eine verbesserte oder zumindest eine alternative Ausführungsform anzugeben, welche konstruktiv einfach aufnehmbar und somit kostengünstig herzustellen ist und andererseits eine Montage der Filtereinrichtung erleichtert.

Dieses Problem wird erfindungsgemäß durch den Gegenstand des unabhängigen Patentanspruchs 1 gelöst. Vorteilhafte Ausführungsformen sind Gegenstand der abhängigen Ansprüche.

Die vorliegende Erfindung beruht auf dem allgemeinen Gedanken, bei einer an sich bekannten Filtereinrichtung mit einem einen Filtergehäusetopf und einen Filtergehäusedeckel aufweisenden Filtergehäuse am Filtergehäusetopf einen rohrförmigen Dom vorzusehen, der bei montierten Filtereinrichtung in einen Innenraum des Ringfilterelements eingreift. Dabei ist an einem freien Ende des rohrförmigen Doms ein Führungselement vorgesehen, das mit einer am Ringfilterelement angeordneten Führungskontur in Wirkverbindung steht. Das Führungselement und die dazu komplementäre Führungskontur bewirken im Zusammenspiel eine gezielte Führung beim Einbau des Ringfilterelements in den Filtergehäusetopf des Filtergehäuses. Die Führungskontur des Ringfilterelements wirkt dabei mit dem Führungselement derart zusammen, dass dieses bei der Montage entlang der Führungskontur geführt wird und dadurch ein einfaches und passgenaues Einführen des am Ringfilterelement an einer unteren Endscheibe axial abstehenden Pins in einen filtergehäusetopfseitigen Kanal sicherstellt, so dass dieser fluiddicht verschlossen werden kann. Das Vorsehen eines solchen Führungselements am freien Ende des rohrförmigen Doms, bietet dabei nicht nur eine konstruktiv sehr einfache Möglichkeit, das die zum Führungselement komplementäre Führungskontur aufweisende Ringfilterelement zu führen, sondern es kann auf diese Weise auch auf andere, oftmals technisch aufwändige und somit kostenintensive Führungskonturen verzichtet werden. Trotz der konstruktiv relativ einfachen Ausführung der Führungskontur am Ringfilterelement bewirkt diese bei der Montage der Filtereinrichtung eine sehr zielgerichtete und zuverlässige Führung des Ringfilterelements. Beim Entlanggleiten des filtergehäusetopfseitigen Führungselements entlang der Führungskontur kann der am Ringfilterelement vorgesehene Pin zuverlässig in den filtergehäusetopfseitigen Kanal eingeführt werden. Mit dem erfindungsgemäß vorgesehenen und am freien Ende des rohrförmigen Doms von diesem abstehenden Führungselement sowie der dazu komplementären, am Ringfilterelement vorgesehenen Führungskontur kann somit die Montage der Filtereinrichtung deutlich vereinfacht werden.

Erfindungsgemäß weist die am Ringfilterelement vorgesehene Führungskontur eine sich in axialer Richtung des Ringfilterelements erstreckende Ausnehmung, insbesondere eine Axialnut, auf, zu welcher das Führungselement bei der Montage der Filtereinrichtung hingeführt wird. Die Ausnehmung ist dabei relativ zum Pin so angeordnet, dass dieser nur in den filtergehäusetopfseitigen Kanal einführbar ist, sofern das Führungselement in die Ausnehmung eingreift. Diese genaue Ausrichtung des Pins relativ zum Führungselement und das Zusammenwirken des Führungselements der ringfilterelementseitigen Führungskontur bewirken, dass ausschließlich autorisierte Ringfilterelemente in die Filtereinrichtung eingesetzt werden können. Dies gilt hingegen nicht für Ringfilterelemente, die beispielsweise keinen oder einen andersartige ausgebildeten Pin aufweisen. Bei diesen wird der filtergehäusetopf-seitige Kanal nicht verschlossen und eine das Ringfilterelement umgehende Bypassströmung ermöglicht, die die Filterwirkung der Filterrichtung stark reduziert.

Erfindungsgemäß steht das Führungselement von einer Stirnfläche des rohrförmigen Doms entlang der axialen Richtung des Filtergehäuses ab. Auf diese Weise lässt sich das Führungselement konstruktiv sehr einfach herstellen, was die Herstellungskosten der Filtereinrichtung reduziert.

Vorteilhafterweise kann das Führungselement mit der als Axialnut ausgebildeten Ausnehmung nach dem Schlüssel-Schloss-Prinzip zusammenwirken. Ein solches Schlüssel-Schloss-Prinzip ist insbesondere dadurch gegeben, dass das jeweilige Führungselement lediglich in eine bestimmte, komplementär zum Führungselement ausgebildete Axialnut eingreifen kann. Hierzu können das jeweilige Führungselement und/oder die jeweilige Axialnut derart ausgebildet und/oder angeordnet sein, das jeweilige Führungselement weder bei der Montage bzw. Demontage noch im montierten Zustand beschädigungs- oder zerstörungsfrei in eine nicht-zugehörige Axialnut eingreifen kann.

Das Schlüssel-Schloss-Prinzip kann auch dadurch realisiert sein, dass die Axialnut jeweils eine spezifische Form und/oder Größe und/oder Geometrie aufweist. Dementsprechend weisen auch die komplementär ausgebildeten zugehörigen Führungselemente jeweils eine unterschiedliche Form und/oder Größe und/oder Geometrie auf, die zu den Axialnuten komplementär ist.

In einer vorteilhaften Weiterbildung kann auch daran gedacht sein, dass nicht nur ein einziges Führungselement und eine dazu komplementäre Ausnehmung am Dom bzw. Ringfilterelement vorgesehen ist, sondern zwei oder mehr solcher Führungselemente bzw. Ausnehmungen, welche dann alle wie vorangehend erläutert nach dem Schlüssel-Schloss-Prinzip aufgebaut sind. Die auf diese Weise erzeugte spezifische Codierung des Ringfilterelements lässt sich durch Bereitstellung mehrerer nach dem Schlüssel-Schloss-Prinzip zusammenwirkender Führungselemente/Ausnehmungen stark verbessern.

Bei der Verwendung von Ringfilterelementen mit Pin muss sowohl das Führungselement als auch ein Abstand zwischen diesem und dem Pin genau vordefinierten Maßen entsprechen, so dass beim Zusammenwirken des Führungselements mit der Führungskontur der Pin auch in den filtergehäusetopfseitigen Kanal eingeführt wird, sofern das Führungselement in die Ausnehmung, insbesondere die Axialnut, der Führungskontur eingeschoben wird. Generell wird auf diese Weise die Verwendung von nicht-autorisierten Ringfilterelementen zumindest stark erschwert.
In einer vorteilhaften Weiterbildung ist das Führungselement als sich im Wesentlichen in der axialen Richtung des Filtergehäuses erstreckender Führungspin ausgebildet. Dies ermöglicht ein sehr präzises Anordnen des Ringfilterelements relativ zum Filtergehäuse bei der Montage der Filtereinrichtung, wenn der Führungspin über eine größere Distanz hinweg in eine entsprechende Ausnehmung mit entsprechender Ausnehmungstiefe eingeführt werden soll.

In einer besonders bevorzugten Ausführungsform kann am Ringfilterelement ein Ventilelement vorgesehen sein, welches durch den Führungspin in einem in die am Ringfilterelement vorgesehene Ausnehmung eingeschobenen Zustand geöffnet wird. Entsprechend kann das Ventilelement derart ausgebildet sein, dass es beim Entfernen des Führungspins aus der Ausnehmung wieder selbsttätig verschlossen wird. Das Ventilelement kann dabei bevorzugt in einem Reinkanal des Ringfilterelements vorgesehen sein, so dass sichergestellt wird, dass der Reinkanal in einem nicht-montierten Zustand des Ringfilterelements automatisch verschlossen wird.

In einer ebenfalls besonders einfach herzustellenden und kostengünstigen Ausführungsform kann die Führungskontur an einer stützstrukturartigen Innenzarge des Ringfilterelements angeordnet sein.

Besonders zweckmäßig kann die Führungskontur in der Art einer kreisförmigen Rampe ausgebildet sein. Beim Aufsetzen des Ringfilterelements kann somit das Führungselement, insbesondere, wenn es als Führungspin ausgebildet ist, auf der Führungskontur entlang der kreisförmigen Rampe gleiten, bis es die Ausnehmung, die vorzugsweise in der Art einer Axialnut ausgebildet sein kann, erreicht und in diese eingeschoben werden kann oder in diese hineingleitet. Ein solcher Einschiebe- bzw. Gleitvorgang kann dabei beispielsweise im Zusammenhang mit einem Aufschraubvorgangs des Filtergehäusedeckels auf den Filtergehäusetopf durchgeführt werden.

Besonders bevorzugt ist die Axialnut an einer bezüglich der unteren Endscheibe der Filtereinrichtung tiefsten Stelle angeordnet. Dies stellt einen möglichst langen Gleitweg des Führungselements auf der Führungskontur sicher, bevor dieses in die Ausnehmung auf der Führungskontur eingreift bzw. in diese hineinrutscht oder eingeschoben werden kann.

In einer besonders materialsparenden Ausführungsform ist die axiale Ausnehmung im Wesentlichen U-förmig ausgebildet. Dies bedeutet, dass die Ausnehmung eine im Wesentlichen zum als Pin ausgebildeten Führungselement komplementäre Kontur aufweist.

Um die Betriebssicherheit der Filtereinrichtung zu erhöhen und insbesondere ein unerwünschtes Auslaufen von einem Fluid, beispielsweise Öl o.ä., in einem am Filtergehäuse montierten Zustand des Ringfilterelements zu verhindern, kann zumindest an der dem Führungselement benachbarten Endscheibe des Ringfilterelements eine Dichtlippe angeordnet sein, die sich bei eingebautem Ringfilterelement dicht an eine Außenfläche des rohrförmigen Doms anschmiegt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine teilweise geschnittene Ansicht eines Filtergehäuses einer Filtereinrichtung,
- Fig. 2: eine perspektivische Teilansicht einer Innenzarge eines Ringfilterelement mit einer Führungskontur,
- Fig. 3: eine Teildarstellung der Filtereinrichtung in einem Längsschnitt,
- Fig. 4: eine perspektivische Ansicht eines Ringfilterelements,
- Fig. 5: eine Teildarstellung eines Längsschnitts der Filtereinrichtung im Bereich der unteren Endscheibe.

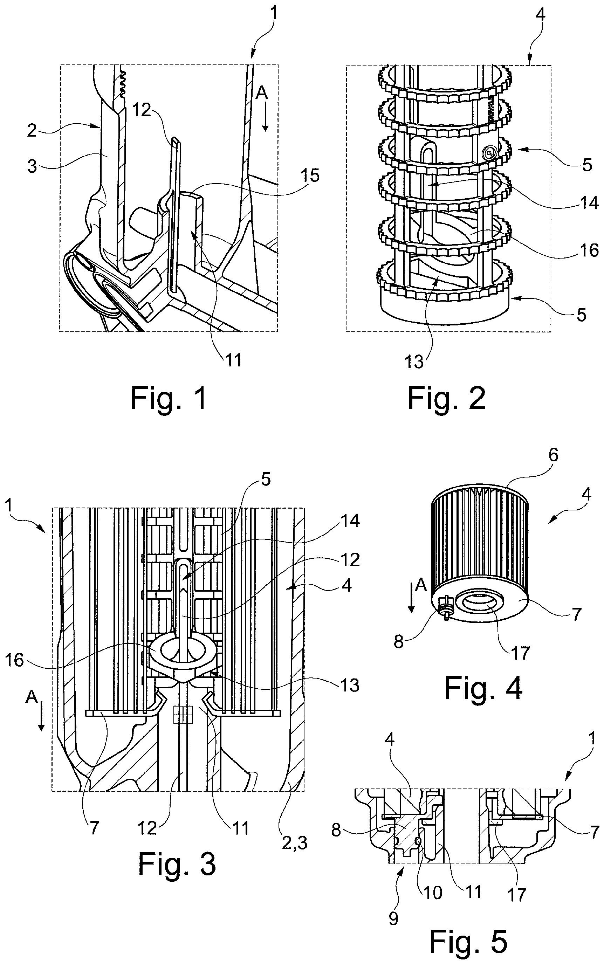

In der Fig. 1 ist ein Filtergehäuse einer Filtereinrichtung 1 in einer perspektivischen Teilansicht gezeigt und mit dem Bezugszeichen 2 bezeichnet. Die Filtereinrichtung 1 kann beispielsweise ein Öl- oder Kraftstofffilter einer Brennkraftmaschine eines Kraftfahrzeugs sein. Das Filtergehäuse 2 umfasst einen in der Teilansicht der Fig. 1 gezeigten Filtergehäusetopf 3 und einen in den Figuren der Übersichtlichkeit halber nicht dargestellten Filtergehäusedeckel. Im Filtergehäuse 2 ist ein Ringfilterelement 4 angeordnet, was in der Längsschnittdarstellung der Fig. 3 gezeigt ist. In der im Folgenden noch zu erläuternden Fig. 4 ist ein solches Ringfilterelement 4 jeweils als separates Bauteil in einer perspektivischen Ansicht dargestellt.

Zur Montage der Filtereinrichtung 1 kann das Ringfilterelement 4 in das Filtergehäuse 2 eingesetzt und anschließend der Filtergehäusedeckel am Filtergehäusetopf 3 befestigt werden. Hierzu kann der Filtergehäusedeckel mit dem Filtergehäusetopf 3 verschraubbar ausgebildet sein. Das Ringfilterelement 5 ist in bekannter Weise von einer oberen Endscheibe 6 und einer unteren Endscheibe 7 in einer axialen Richtung A begrenzt.

Aus der Darstellung der Fig. 4 lässt sich entnehmen, dass von der unteren Endscheibe 7 in der Axialrichtung A ein Pin 8 absteht. Bei komplett montierter Filtereinrichtung 1 kann mittels des Pins 8 ein filtergehäusetopfseitiger Kanal 9 fluiddicht verschlossen werden. Dies ist in der Längsschnittdarstellung der Fig. 5 gezeigt. Der Kanal 9 kann dabei ein Leerlaufkanal o.ä. sein. Am Pin 8 kann in bekannter Weise ein Dichtungselement, beispielsweise eine O-Ring-Dichtung 10, vorgesehen sein, mittels welcher der Pin 8 den Kanal 9 fluiddicht verschließt. Der Übersichtlichkeit halber sind weder Pin 8 noch der Kanal 9 in der Längsschnittdarstellung der Fig. 3 gezeigt.

Betrachtet man nun wieder die Darstellung der Fig. 1, so erkennt man, dass am Filtergehäusetopf 3 ein rohrförmiger Dom 11 vorgesehen ist, welcher bei montierter Filtereinrichtung 1 in einen Innenraum des Ringfilterelements 4 (vgl. Fig. 3) eingreift. An einem freien Ende des rohrförmigen Doms 11 ist ein Führungselement 12 vorgesehen, das mit einer am Ringfilterelement 4 angeordneten Führungskontur 13 (vgl. Fig. 2, 3) zusammenwirkt. Das Führungselement 12 kann dabei als sich im Wesentlichen in der axialen Richtung A erstreckender Führungspin ausgebildet sein. Die am Ringfilterelement 4 vorgesehene Führungskontur 13 kann eine sich in axialer Richtung A des Filtergehäuses 2 erstreckende Ausnehmung 14 aufweisen. Die Ausnehmung 14 kann dabei in der Art einer Axialnut ausgebildet sein. Vorzugsweise ist die Ausnehmung 14 wie in den Fig. 2 und 3 gezeigt U-förmig ausgebildet. Bei der Montage der Filtereinrichtung 1 wird das Führungselement 12 zur Ausnehmung 14 hingeführt. Die Ausnehmung 14 ist relativ zum Pin 8 so angeordnet, dass dieser in den Kanal 9 einführbar ist, sofern das Führungselement 12 in die Ausnehmung 14 der Führungskontur 13 eingreift.

Am Ringfilterelement 4 kann ein der Übersichtlichkeit halber in den Figuren nicht dargestelltes Ventilelement vorgesehen sein, welches durch den Führungspin in die am Ringfilterelement 4 vorgesehene Ausnehmung 14 eingeschobene Zustand geöffnet wird. Entsprechend kann das Ventilelement derart ausgebildet sein, dass es beim Entfernen des Führungspins aus der Ausnehmung 14 wieder verschlossen wird.

Betrachtet man nun wieder die Darstellung der Fig. 1, so erkennt man, dass das Führungselement 12 von einer Stirnfläche 15 des rohrförmigen Doms 11 in der axialen Richtung A des Filtergehäuses 2 absteht. Aus der Fig. 2 lässt sich entnehmen, dass die Führungskontur 13 an der stützstrukturartigen Innenzarge 5 des Ringfilterelements 4 angeordnet sein kann. Die Führungskontur 13 kann, wie in den Fig. 2 und 3 gezeigt, in der Art einer kreisförmigen Rampe 16 ausgebildet sein. Die beispielsweise als Axialnut ausgebildete Ausnehmung 14 kann an einer bezüglich der unteren Endscheibe 7 des Ringfilterelements 4 tiefsten Stelle angeordnet sein, was in der Darstellung der Fig. 2 gezeigt ist.

Das Führungselement 12 kann mit der als Axialnut ausgebildeten Ausnehmung 14 nach dem Schlüssel-Schloss-Prinzip zusammenwirken. Ein solches Schlüssel-Schloss-Prinzip ist insbesondere dadurch gegeben, dass das jeweilige Führungselement 12 lediglich in eine bestimmte, komplementär zum Führungselement 12 ausgebildete Axialnut eingreifen kann. Hierzu können das jeweilige Führungselement 12 und/oder die jeweilige Axialnut derart ausgebildet und/oder angeordnet sein, das jeweilige Führungselement 12 weder bei der Montage bzw. Demontage noch im montierten Zustand beschädigungs- oder zerstörungsfrei in eine nicht-zugehörige Axialnut eingreifen kann.

Das Schlüssel-Schloss-Prinzip kann auch dadurch realisiert sein, dass die als Axialnut ausgebildete Ausnehmung 14 jeweils eine spezifische Form und/oder Größe und/oder Geometrie aufweisen kann. Dementsprechend können auch die komplementär ausgebildeten zugehörigen Führungselemente 12 jeweils eine unterschiedliche Form und/oder Größe und/oder Geometrie aufweisen, die zu den Axialnuten komplementär ist.

In einer Variante des in den Figuren erläuterten Ausführungsbeispiels kann auch daran gedacht sein, dass nicht nur ein einziges Führungselement 12 und eine dazu komplementäre Ausnehmung 14 am Dom 11 bzw. Ringfilterelement 4 vorgesehen ist, sondern zwei oder mehr solcher Führungselemente 12 bzw. Ausnehmungen 14 , welche dann alle wie vorangehend erläutert nach dem Schlüssel-Schloss-Prinzip aufgebaut sind. Die auf diese Weise erzeugte spezifische Codierung des Ringfilterelements 4 lässt sich durch Bereitstellung mehrerer nach dem Schlüssel-Schloss-Prinzip zusammenwirkender Führungselemente/Ausnehmungen 12, 14 stark verbessern.

Zumindest an der dem Führungselement 12 benachbarten Endscheibe, also im Falle des Ausführungsbeispiels an der unteren Endscheibe 7, kann eine Dichtlippe 17 (vgl. Fig. 4, 5) angeordnet sein, die sich bei eingebautem Ringfilterelement 4 an eine Außenfläche des rohrförmigen Doms 11 anschmiegt. Die Dichtlippe 17 kann in einer Variante auch einstückig mit der unteren Endscheibe 7 ausgebildet sein. Für die Dichtfunktion ist es dabei unerheblich, ob die Dichtlippe 17 bei eingebautem Ringfilterelement 4 nach oben weist oder nach unten. Die Dichtlippe 17 kann beispielsweise aus Silikon oder einem Vlies hergestellt sein.

Zur Montage der Filtereinrichtung 1 wird zunächst das Ringfilterelement 4 in einem ersten Montageschritt in den Filtergehäusetopf 3 eingesetzt, und zwar so weit, bis das Führungselement 12 auf der Führungskontur 13 aufliegt. Anschließend wird das Ringfilterelement 4, beispielsweise durch Aufschrauben des Filtergehäusedeckels, verdreht, so dass das Führungselement 12 entlang der Führungskontur 13 gleitet, bis es die als Axialnut ausgebildete Ausnehmung 14 erreicht. Nach Erreichen der Ausnehmung 14 ist der Pin 8 koaxial fluchtend zum Kanal 9 ausgerichtet, so dass das Ringfilterelement 4 direkt entlang der axialen Richtung A mit dem Führungselement 12 in die Ausnehmung 14 eingeschoben werden kann, wobei auf diese Weise gleichzeitig der Pin 8 in den Kanal 9 eingeschoben wird.

Von besonderem Vorteil bei der erfindungsgemäßen Filtereinrichtung 1 ist, dass nicht wie bisher aus dem Stand der Technik bekannt, der Pin 8 an der Rampe 16 entlang gleitet und dadurch als Gleitelement ausgebildet sein muss, sondern vielmehr elastisch, bzw. aus Gummi hergestellt sein kann, da er keinerlei Gleiteigenschaften mehr aufweisen muss. In der in den Figuren nicht gezeigten Variante kann der Pin 8 auch rohrförmig ausgebildet sein oder eine kreuzartige Querschnittsstruktur aufweisen.

Die Innenzarge 5 kann käfigartig ausgebildet sein, wobei die kreisförmige Rampe 16 mit der Führungskontur 13 innerhalb einer solchen käfigartigen Struktur angeordnet sein kann. Die Rampe 16 kann Teil der Innenzarge 5 sein oder sich als zur Innenzarge 5 separates Bauteil an der Innenzarge 5 abstützen. Grundsätzlich kann ist also vorstellbar, dass die Führungskontur 13 separat zur Innenzarge 5 ausgebildet ist und an dieser befestigbar bzw. befestigt ist oder integral an der Innenzarge 5 ausgeformt ist.

## Patentansprüche

1. Filtereinrichtung (1), insbesondere ein Öl- oder Kraftstofffilter,
- mit einem, einen Filtergehäusetopf (3) und einen Filtergehäusedeckel aufweisenden Filtergehäuse (2), in welchem ein Ringfilterelement (4) angeordnet ist, das an einer unteren Endscheibe (7) einen axial abstehenden Pin (8) aufweist, mittels welchem es bei montierter Filtereinrichtung (1) in einen filtergehäusetopfseitigen Kanal (9) eingreift,
- wobei am Filtergehäusetopf (3) ein rohrförmiger Dom (11) vorgesehen ist, der bei montierter Filtereinrichtung (1) in einen Innenraum des Ringfilterelements (4) eingreift,
- wobei an einem freien Ende des rohrförmigen Doms (11) ein Führungselement (12) vorgesehen ist, das mit einer am Ringfilterelement (4) angeordneten Führungskontur (13) zusammenwirkt,
- wobei die am Ringfilterelement (4) vorgesehen Führungskontur (13) eine sich in axialer Richtung (A) des Filtergehäuses (2) erstreckende Ausnehmung (14), insbesondere eine Axialnut, aufweist, zu welcher das Führungselement (12) bei der Montage der Filtereinrichtung (1) hingeführt wird, und die relativ zum Pin (8) so angeordnet ist, dass dieser in den filtergehäusetopfseitigen Kanal (9) einführbar ist, sofern das Führungselement (12) in die Ausnehmung (14) eingreift,
**dadurch gekennzeichnet, dass**
das Führungselement (12) von einer Stirnfläche (15) des rohrförmigen Doms (11) entlang der axialen Richtung (A) des Filtergehäuses (2) absteht.

2. Filtereinrichtung nach Anspruch 1,
**dadurch gekennzeichnet, dass**
das Führungselement (12) als sich im Wesentlichen in der axialen Richtung (A) erstreckender Führungspin ausgebildet ist.

3. Filtereinrichtung nach Anspruch 1 oder 2,
**dadurch gekennzeichnet, dass**
am Ringfilterelement (4) ein Ventilelement vorgesehen wird, welches durch den Führungspin in einem in die am Ringfilterelement (4) vorgesehene Ausnehmung (14) eingeschobenen Zustand geöffnet wird.

4. Filtereinrichtung nach einem der vorhergehenden Ansprüche,
**dadurch gekennzeichnet, dass**
die Führungskontur (13) an einer stützstrukturartigen Innenzarge (5) des Ringfilterelements (4) angeordnet ist.

5. Filtereinrichtung nach einem der vorhergehenden Ansprüche,
**dadurch gekennzeichnet, dass**
die Führungskontur (13) in der Art einer kreisförmigen Rampe (16) ausgebildet ist.

6. Filtereinrichtung nach einem der vorhergehenden Ansprüche,
**dadurch gekennzeichnet, dass**
die Axialnut an einer bezüglich der unteren Endscheibe (7) tiefsten Stelle angeordnet ist.

7. Filtereinrichtung nach einem der vorhergehenden Ansprüche,
**dadurch gekennzeichnet, dass**
die Ausnehmung (14) im Wesentlichen U-förmig ausgebildet ist.

8. Filtereinrichtung nach einem der vorhergehenden Ansprüche,
**dadurch gekennzeichnet,**
**dass** zumindest an der dem Führungselement (12) benachbarten Endscheibe (7) eine Dichtlippe (17) angeordnet ist, die sich bei eingebautem Ringfilterelement (4) dicht an eine Außenfläche des rohrförmigen Doms (11) anschmiegt.

## Claims

1. Filtering device (1), in particular an oil filter or a fuel filter,
- having a filter housing (2), having a filter housing jar (3) and a filter housing cover, in which is disposed a ring filter element (4) which has on a bottom end disc (7) an axially projecting pin (8) by means of which said ring filter element engages in a filter housing jar-side channel (9) when the filtering device (1) is installed,
- wherein on the filter housing jar (3) is provided a tube-shaped dome (11), which engages in an inner chamber of the ring filter element (4) when the filtering device (1) is installed,
- wherein on a free end of the tube-shaped dome (11) a guide element (12) is provided which interacts with a guide contour (13) disposed on the ring filter element (4),
- wherein the guide contour (13) provided on the ring filter element (4) has a recess (14), in particular an axial groove, extending in axial direction (A) of the filter housing (2), to which the guide element (12) is guided when installing the filtering device (1), and which is disposed in relation to the pin (8) such that said pin can be guided into the filter housing jar-side channel (9), insofar as the guide element (12) engages in the recess (14),
**characterised in that**
the guide element (12) projects from an end surface (15) of the tube-shaped dome (11) along the axial direction (A) of the filter housing (2).

2. Filtering device according to claim 1,
**characterised in that**
the guide element (12) is designed as a guide pin extending substantially in the axial direction (A).

3. Filtering device according to claim 1 or 2,
**characterised in that**
on the ring filter element (4) is provided a valve element, which is opened by the guide pin in a state in which it has been slotted into the recess (14) provided on the ring filter element (4).

4. Filtering device according to any one of the preceding claims,
**characterised in that**
the guide contour (13) is disposed on a support structure-like inner frame (5) of the ring filter element (4).

5. Filtering device according to any one of the preceding claims,
**characterised in that**
the guide contour (13) is formed in the manner of a circular-shaped slope (16).

6. Filtering device according to any one of the preceding claims,
**characterised in that**
the axial groove is disposed at a bottommost point with respect to the bottom end disc (7).

7. Filtering device according to any one of the preceding claims,
**characterised in that**
the recess (14) is designed substantially U-shaped.

8. Filtering device according to any one of the preceding claims,
**characterised in**
**that** at least on the end disc (7) adjacent to the guide element (12) is disposed a sealing lip (17) which closes tightly onto an outer surface of the tube-shaped dome (11) when the ring filter element (4) is installed.

## Revendications

1. Dispositif de filtrage (1), en particulier un filtre à huile ou à carburant,
- avec un boîtier de filtre (2), présentant un pot de logement de filtre (3) et un couvercle de logement de filtre, dans lequel est agencé un élément de filtre annulaire (4), qui présente une broche (8) dépassant axialement au niveau d'un disque d'extrémité inférieur (7), au moyen de laquelle il entre en prise dans un canal côté pot de logement de filtre (9) lorsque le dispositif de filtrage (1) est monté,
- dans lequel un dôme en forme de tube (11), qui entre en prise dans un espace intérieur de l'élément de filtre annulaire (4) lorsque le dispositif de filtrage (1) est monté, est prévu au niveau du pot de logement de filtre (3),
- dans lequel un élément de guidage (12), qui coopère avec un contour de guidage (13) agencé au niveau de l'élément de filtre annulaire (4), est prévu au niveau d'une extrémité libre du dôme en forme de tube (11),
- dans lequel le contour de guidage (13) prévu au niveau de l'élément de filtre annulaire (4) présente un évidement (14) s'étendant dans la direction axiale (A) du boîtier de filtre (2), en particulier une rainure axiale, vers lequel l'élément de guidage (12) est guidé lors du montage du dispositif de filtrage (1), et qui est agencé par rapport à la broche (8) de sorte que celle-ci peut être introduite dans le canal côté pot de logement de filtre (9), si l'élément de guidage (12) entre en prise dans l'évidement (14),
**caractérisé en ce que**
l'élément de guidage (12) fait saillie de la surface frontale (15) du dôme en forme de tube (11) le long de la direction axiale (A) du boîtier de filtre (2).

2. Dispositif de filtrage selon la revendication 1,
**caractérisé en ce que**
l'élément de guidage (12) est réalisé en tant que goupille de guidage s'étendant sensiblement dans la direction axiale (A).

3. Dispositif de filtrage selon la revendication 1 ou 2,
**caractérisé en ce que**
un élément de soupape, lequel est ouvert par la goupille de guidage dans un état inséré dans l'évidement (14) prévu au niveau de l'élément de filtre annulaire (4), est prévu au niveau de l'élément de filtre annulaire (4).

4. Dispositif de filtrage selon l'une quelconque des revendications précédentes,
**caractérisé en ce que**
le contour de guidage (13) est agencé au niveau d'un cadre intérieur (5) en forme de structure d'appui de l'élément de filtre annulaire (4).

5. Dispositif de filtrage selon l'une quelconque des revendications précédentes,
**caractérisé en ce que**
le contour de guidage (13) est réalisé à la manière d'une rampe circulaire (16).

6. Dispositif de filtrage selon l'une quelconque des revendications précédentes,
**caractérisé en ce que**
la rainure axiale est agencée au niveau d'un endroit le plus bas par rapport au disque d'extrémité inférieur (7).

7. Dispositif de filtrage selon l'une quelconque des revendications précédentes,
**caractérisé en ce que**
l'évidement (14) est réalisé sensiblement en forme de U.

8. Dispositif de filtrage selon l'une quelconque des revendications précédentes,
**caractérisé en ce**
**qu'**une lèvre d'étanchéité (17), qui épouse de manière étanche une surface extérieure du dôme en forme de tube (11) lorsque l'élément de filtre annulaire (4) est monté, est agencée au moins au niveau du disque d'extrémité (7) adjacent à l'élément de guidage (12).
